# EUROPÄISCHE PATENTSCHRIFT

(11) **EP 4 066 359 B1**
(45) Veröffentlichungstag und Bekanntmachung des Hinweises auf die Patenterteilung: **15.04.2026**
(21) Anmeldenummer: 20816914.4
(22) Anmeldetag: 25.11.2020
(51) Int. Cl.: H02K 3/52

(54) **STATOR EINER ELEKTRISCHEN MASCHINE MIT EINER VERSCHALTUNGSEINRICHTUNG UND ELEKTRISCHE MASCHINE**
STATOR IN AN ELECTRIC MACHINE WITH A WIRING DEVICE AND ELECTRIC MACHINE
STATOR DANS UNE MACHINE ÉLECTRIQUE COMPORTANT UN DISPOSITIF DE CÂBLAGE, ET MACHINE ÉLECTRIQUE

(30) Priorität: 28.11.2019 DE 102019218442
(43) Veröffentlichungstag der Anmeldung: 05.10.2022
(73) Patentinhaber: ZF Friedrichshafen AG, 88046 Friedrichshafen (DE)
(72) Erfinder: SCHRENK, Tobias, 96047 Bamberg (DE); WIEDER, Christoph, 96328 Küps (DE); WILLACKER, Katja, 97353 Wiesentheid (DE); LINDWURM, Roland, 97526 Sennfeld (DE); WITTMANN, Jochen, 97705 Burkardroth (DE)
(86) Internationale Anmeldenummer: PCT/EP2020/083277
(87) Internationale Veröffentlichungsnummer: WO 2021/105156

(56) Entgegenhaltungen:
- DE-A1- 102009 001 830
- DE-A1- 102015 225 538
- DE-A1- 102016 215 716
- DE-A1- 102016 218 129
- DE-A1- 102017 211 168
- DE-A1- 102017 216 084
- JP-A- 2007 288 821
- US-A1- 2015 188 376

## Beschreibung

Die vorliegende Erfindung bezieht sich auf einen Stator einer elektrischen Maschine mit einer Verschaltungseinrichtung für Statorspulen gemäß dem Oberbegriff von Patentanspruch 1 und auf eine elektrische Maschine gemäß Patentanspruch 4.

Ein gattungsgemäßer Stator ist bereits mit der DE 10 2017 211168 A1 bekannt geworden. Dabei ist die Verschaltungseinrichtung mittels axial von den radial inneren und äußeren Schenkeln der Wickelkörper abstehenden Pins aufgenommen, welche unter Ausbildung eines Kopfes warm verstemmt werden. Dabei werden gleichzeitig eine axiale als auch eine radiale Endlage der Verschaltungseinrichtung am Stator eingenommen und fixiert. Eine ebensolche Lösung ist in der DE 10 2016 200 115 A1 dargestellt.

Mit der DE 10 2015 225538 A1 ist eine elektrische Maschine mit einem Stator bekanntgeworden, dessen Verschaltungseinrichtung axial an den beiden radial beabstandeten Schenkeln der Wickelkörpern der Statorspulen mit pfeilförmigen Rastelemente der Verschaltungseinrichtung verrastet sind.

Bei dem mit der DE 10 2016 215716 A1 beschriebenen Stator ist die Verschaltungseinrichtung mit ersten Haltemitteln formschlüssig an den radialen Wandungen bzw. Schenkeln mehrerer Wickelkörper und radial außerhalb der Spulenaufnahme an den äußeren Schenkeln der Wickelkörper mittels Kleben befestigt.

Bei dem mit der DE 10 2017 216084 A1 bekannt gewordenen Stator erfolgt die Festlegung der Verschaltungseinrichtung beim axialen Fügen einerseits mittels von der Verschaltungseinrichtung axial vorstehender Schneidklemmen, welche gleichzeitig als Rastelemente ausgeführt sind und welche zentrierend in Aufnahmetaschen am Stator eingepresst werden. Zum weiteren erfolgt dieses mittels sich axial von einer stirnseitig am Stator vorgesehenen Isolierlamelle abragenden Kunststoff-Zentrierpins, welche in korrespondierende Zentrieraufnahmen der Verschaltungseinrichtung eingreifen und welche unter Ausbildung eines Kopfes mittels Warmverstemmen umgeformt werden können.

Beim Stator der DE 10 2016 218129 A1 ist die Verschaltungseinrichtung zwischen den radial inneren und radial äußeren Schenkeln der Wickelkörper angeordnet und an diesen befestigt. Dazu sind an der Verschaltungseinrichtung radiale oder axiale Vorsprünge ausgebildet, welche in entsprechende Ausnehmungen an den inneren und äußeren Schenkeln der Wickelkörper eingreifen und so die Verschaltungseinrichtung in radialer und in Umfangsrichtung abstützen. Die axiale Fixierung der Verschaltungseinrichtung an den Schenkeln oder an der Wicklung selbst erfolgt mittels Klebstoff. Alternativ können die Vorsprünge der Verschaltungseinrichtung auch in einen Zwischenraum von zwei benachbarten Statorspulen, insbesondere in dort von jeweils zwei Wickelkörpern gemeinsam gebildete Ausnehmungen eingreifen.

Zur Festlegung der Verschaltungseinrichtung am Stator ist gemäß der DE 10 2009 001 830 A1 vorgesehen, dass die Verschaltungseinrichtung in der Radialebene mit einem Zylinderwandbereich an einer durch die Schenkel der Wickelkörper gebildeten gemeinsamen Innen- oder Außenumfangsflache festgelegt ist und dass die Verschaltungseinrichtung mit einem Radialwandbereich an einer am Stator ausgebildeten Anschlagfläche anliegt und von den Schenkeln der Wickelkörper abstehenden und verstemmbaren axialen Pins aufgenommen und lagegesichert ist.

Bei der mit der JP 2007 288 821 A vorgeschlagenen Lösung ist die Verschaltungseinrichtung am Stator gleichfalls radial zwischen den Schenkeln der Wickelkörper aufgenommen. Dabei sind U-förmig ausgebildete Spulenenden durch Schlitze in den Schenkeln der Wickelkörper radial beidseitig aus einem Wickelbereich herausgeführt und axial abgebogen, wobei dadurch radial abstehende Anschlussbereiche der Verschaltungseinrichtung in Art einer Verriegelung um- bzw. durchgriffen werden können und damit die gegenseitige axiale Fixierung der Verbindungspartner realisieren.

Schließlich ist bei dem mit der US 2015/188376 A1 offenbarten Stator die Verschaltungseinrichtung zumindest segmentweise mit zwei radial voneinander beabstandeten und axial von einem Hauptkörper in Richtung der Wicklung vorstehenden Wandungsbereichen ausgebildet. Stirnseitig am Stator ist ein Isolator bzw. Wicklungsträger mit zwei, einen Wickelbereich von Spulen begrenzendenden und axial abstehenden Schenkeln ausgebildet. Bei der Montage der Verschaltungsanordnung können die dort vorgesehenen Wandungsbereiche die Schenkel außerhalb des Wickelbereichs formschlüssig umgreifen, wobei der äußere Wandungsbereich mit dem zugeordneten Schenkel eine axiale Rastverbindung ausbildet.

Der vorliegenden Erfindung liegt von diesem Stand der Technik ausgehend die Aufgabe zugrunde, einen Stator einer elektrischen Maschine mit einer Verschaltungseinrichtung für Statorspulen der eingangs genannten Art und eine solche elektrische Maschine weiter zu verbessern. Insbesondere wird eine verbesserte radiale Abstützung der Verschaltungseinrichtung am Stator und damit ein verbessertes Verhalten gegenüber betriebsbedingten Vibrationen der elektrischen Maschine angestrebt.

Diese Aufgabe wird durch einen Stator mit den Merkmalen von Patentanspruch 1 und durch eine elektrische Maschine gemäß Patentanspruch 4 gelöst.

Vorteilhafte Ausgestaltungen und Weiterbildungen der Erfindung sind den abhängigen Ansprüchen, der nachfolgenden Beschreibung und den beigefügten Figuren entnehmbar.

Es wird somit ein Stator einer elektrischen Maschine mit einem ringförmigen und um eine Mittelachse ausgebildeten Blechpaket vorgeschlagen, an welchem mittels Wickelkörpern Statorspulen mit Spulenenden angeordnet sind. Der Stator umfasst weiter eine Verschaltungseinrichtung mit mehreren gegenseitig isolierten Verbindungsleitern, wobei Spulenanschlussbereiche zur Verschaltung der Statorspulen ausgebildet sind. Die Verschaltungseinrichtung ist am Stator in einer axialen Fügerichtung zu den Statorspulen gefügt, im montierten Zustand benachbart zu den Statorspulen angeordnet und mit axialen Verbindungsmitteln unter Ausbildung einer Mehrzahl von Axialverbindungen an mehreren der Wickelkörper festgelegt. Dabei sind axial beidseitig wirkende Axialanschläge vorgesehen, zwischen denen die Verschaltungseinrichtung im Wesentlichen spielfrei festgelegt ist und welche durch die axialen Verbindungsmittel selbst gebildet werden.

Bei dem vorgeschlagenen Stator weist die Verschaltungseinrichtung radiale Abstützmittel zum Zusammenwirken mit den Wickelkörpern auf, welche unabhängig von den axialen Verbindungsmitteln ausgebildet sind.

Die vorgeschlagene gegenseitige Ausbildung der Verschaltungseinrichtung und der Wickelkörper hat einen positiven Effekt in Bezug auf die mechanische und dynamische Festigkeit der gesamten Statoranordnung. Da die Verschaltungseinrichtung unmittelbar am Stator angebunden ist und eine Funktionseinheit des Stators ausbildet, kann diese beim Betreiben der elektrischen Maschine, insbesondere bei der Verwendung als ein Fahrantriebsmotor eines Kraftfahrzeugs mit dieser gemeinsam schwingen. Dabei treten vielfach auch Relativbewegungen zwischen dem Stator und der Verschaltungseinrichtung auf, wobei insbesondere die Spulenenden einer hochfrequenten mechanischen Wechselbelastung unterliegen und Drahtabrisse auftreten können. Durch die hier vorgeschlagene radiale Abstützung der Verschaltungseinrichtung können beim Auftreten von Vibrationen bzw. Schwingungen gegenseitige Relativbewegungen der Statorspulen und der Verschaltungseinrichtung deutlich reduziert werden, wodurch die Gefahr von Drahtabrissen merklich reduziert werden kann.

Gemäß der Erfindung erfolgt demnach bezüglich der Festlegung der Verschaltungseinrichtung an den Wickelkörpern des Stators eine Funktionstrennung, wobei axiale Verbindungsmittel und radiale Abstützmittel funktional unabhängig voneinander ausgebildet werden. Die axialen Verbindungsmittel dienen somit hauptsächlich der Einnahme und Sicherung einer definierten Axiallage der Verschaltungseinrichtung. Die radialen Abstützmittel dienen entsprechend hauptsächlich der Einnahme und Sicherung einer definierten Radiallage der Verschaltungseinrichtung und insbesondere der Verringerung und Vermeidung einer durch gegenseitige Radialbewegungen der Spulen zu der Verschaltungseinrichtung und einer in deren Folge auftretenden periodischen Biegebeanspruchung der Spulenenden. Eine Radialbelastung der axialen Verbindungsmittel kann auf diese Weise deutlich reduziert werden. Gleichzeitig kann durch die Ausbildung von unabhängigen radialen Abstützmitteln dauerhaft eine verbesserte radiale Positionierung der Verschaltungseinrichtung am Stator erreicht werden.

Die Axialverbindungen bzw. die axialen Verbindungsmittel weisen einen Radialspalt zur Ermöglichung eines Radialspiels auf. Das bedeutet, dass die axialen Verbindungspartner bei einer gegenseitigen Radialbewegung ein gegenseitiges Radialspiel zulassen ohne die radiale Lage des jeweils anderen Verbindungspartners merklich zu beeinflussen. Auf die Ausbildung einer besonderen radialen Maßhaltigkeit der axialen Verbindungsmittel kann verzichtet werden. Die axialen Verbindungsmittel können dadurch noch besser gegenüber von gegebenenfalls verbleibenden radialen Verlagerungen der Verschaltungseinrichtung gegenüber den Spulen entkoppelt und entlastet werden.

Ein Wickelkörper weist einen Wickelbereich auf, der durch einen Wickelträger und zwei den Wickelbereich in axialer Richtung begrenzende und mit dem Wickelträger verbundene Schenkel gebildet ist. Die axialen Verbindungsmittel sind an den Schenkeln der Wickelkörper ausgebildet. Die radialen Abstützmittel der Verschaltungseinrichtung können radial einseitig oder radial beidseitig wirken. Die radialen Abstützmittel können zu diesem Zweck einfach oder mehrfach, insbesondere zweifach ausgebildet sein und dementsprechend mit einem oder mit beiden Schenkeln eines Wickelkörpers zusammenwirken. Eines der genannten Abstützmittel kann an einem Schenkel eines Wickelkörpers radial innen oder radial außen angreifen und die Verschaltungseinrichtung am Stator in einer vorbestimmten Radiallage fixieren.

Zur Erzielung einer hohen Steifigkeit des Stators sind die radialen Abstützmittel zum Zusammenwirken mit beiden Schenkeln an einem der Wickelkörper ausgebildet, wobei diese einen ersten und bedarfsweise einen zweiten Stützbereich ausbilden. Es hat sich dabei als zweckmäßig erwiesen, eine Zentrierung der Verschaltungseinrichtung gegenüber den Statorspulen mittels lediglich einer der beiden Stützbereiche vorzunehmen. Im Idealfall, also bei Vorliegen einer exakt kreisringförmigen Verschaltungseinrichtung und/oder Anordnung der Wickelkörper gelangen die Komponenten bei vorgegebener gegenseitiger Axiallage lediglich an einem der Stützbereiche zentrierend in gegenseitige Anlage. Weicht aufgrund von Fertigungs- und Montagetoleranzen die Verschaltungseinrichtung und/oder die Anordnung der Wickelkörper von einer idealen Kreisringform ab und ist eine der Komponenten beispielweise leicht elliptisch verformt, so können an den Wickelkörpern gleichfalls die zur Ausbildung des zweiten Stützbereichs zusammenwirkenden Flächen gegenseitig in Anlage gelangen und dort eine radiale Festlegung bewirken. Besonders platzsparend ist vorgesehen, die Stützbereiche radial zwischen den axialen Verbindungsmitteln auszubilden.

Das vorgenannte Konzept wird gemäß der Erfindung verwirklicht, indem die Abstützmittel eine erste Stützfläche und eine davon radial beabstandete zweite Stützfläche aufweisen, wobei sich die erste und die zweite Stützfläche radial gegenüberliegen. Dabei erstrecken sich die erste Stützflächen und ein damit zusammenwirkender Führungsabschnitt eines der Schenkel parallel zur Mittelachse, das heißt entlang der axialen Fügerichtung der Verschaltungseinrichtung und bilden den ersten Stützbereich aus. Die zweite Stützfläche und ein damit zusammenwirkender Anlageabschnitt des anderen Schenkels sind dagegen in der axialen Fügerichtung unter einem spitzen Winkel gegenüber der Mittelachse geneigt ausgeführt und bilden bedarfsweise den zweiten Stützbereich aus. Auf diese Weise kann beim axialen Fügen der Verschaltungseinrichtung eine vordefinierte radiale Lagebeziehung zwischen der ersten Stützfläche und dem Führungsabschnitt erzeugt werden, welcher von einer gegenseitigen Axiallage der Verbindungspartner unabhängig ist. Dagegen wird zwischen der zweiten Stützfläche und dem zweiten Anlageabschnitt bedarfsweise eine radiale Lagebeziehung erzeugt, welche gegenüber der zuvor erläuterten Lagebeziehung weniger vordefiniert und damit radial innerhalb vorgegebener Grenzen variabel ist. Die damit beim Fügen erzeugte Radiallage ist insbesondere von den konkret existierenden radialen Fertigungs- und/oder Montagetoleranzen der Fügepartner abhängig.

Zur Vermeidung einer unerwünschten übermäßigen mechanischen Belastung ist es von Vorteil, die Spulenanschlussbereiche der Verbindungsleiter benachbart zu dem ersten Stützbereich anzuordnen. Dadurch sind die Spulenenden und deren Kontaktstellen an den Spulenverbindungsbereichen besonders gut lagefixiert und vor Drahtabrissen geschützt. Insbesondere ist es vorteilhaft, die Spulenanschlussbereiche räumlich näher zu dem ersten Stützbereich als zu dem zu dem zweiten Stützbereich anzuordnen. Mit Vorteil können die Spulenanschlussbereiche der Verbindungsleiter insbesondere benachbart zu dem die Zentrierung der Verschaltungseinrichtung bewirkenden Stützbereich angeordnet sein.

Gemäß einer noch weiteren räumlichen Optimierung der Anordnung können die beiden Spulenenden einer Spule an demselben Schenkel eines der Wickelkörper aus dem Wickelbereich austreten. Dabei kann der erste Stützbereich in Umfangsrichtung am Stator platzsparend zwischen diesen Spulenenden der Schenkel ausgebildet sein.

Weiterhin wird eine elektrische Maschine mit einem Rotor und mit einem Stator vorgeschlagen, wobei der Stator zumindest eines der vorstehend erläuterten Merkmale aufweist.

Nachfolgend wird die Erfindung anhand einer in den Figuren dargestellten Ausführungsform beispielhaft erläutert.

Es zeigen:
- Fig. 1: eine schematische Darstellung einer oberen Halbebene einer elektrischen Maschine mit einem Stator und einer Verschaltungseinrichtung;
- Fig. 2: eine perspektivische Teildarstellung des Stators mit Blick auf die Verschaltungseinrichtung;
- Fig. 3: ein vergrößerter Ausschnitt der Darstellung von Fig. 2 mit Blick auf einen radial inneren Bereich des Stators;
- Fig. 4: eine Axialschnittdarstellung des Stators von Fig. 2 in einer Ebene von axialen Verbindungsmitteln eines Wickelkörpers mit der Verschaltungseinrichtung;
- Fig. 5: eine weitere Axialschnittdarstellung des Stators von Fig. 2 in einer Ebene außerhalb der in Fig. 4 gezeigten Verbindungsmittel.

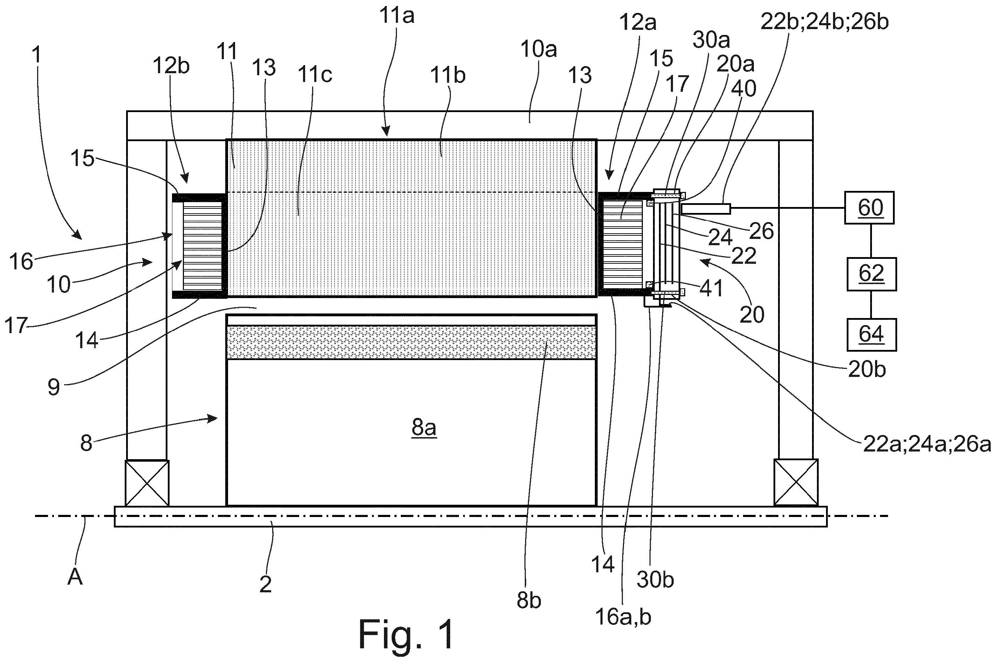

Fig. 1 zeigt schematisch und vereinfacht eine elektrische Maschine 1, welche vorliegend lediglich beispielhaft als eine permanenterregte elektrische Synchronmaschine in Innenläuferbauart ausgebildet ist. Die elektrische Maschine 1 ist insbesondere zur Verwendung als Fahrantrieb eines Hybrid- oder Elektrofahrzeugs ausgeführt und kann somit in einem Antriebsstrang eines solchen Fahrzeugs angeordnet werden.

Die elektrische Maschine 1 weist zunächst einem um eine Rotorwelle 2 mit einer Drehachse A drehbaren Rotor 8 auf, welcher unter Ausbildung eines radialen Luftspalts 9 radial außen von einem Stator 10 umgeben wird. Der Rotor 8 umfasst ein lamelliertes Rotorblechpaket 8a mit einer Mehrzahl von umfangsmäßig gegenseitig beabstandeten Permanentmagneten 8b. Der Stator 10 umfasst einen ringförmigen Statorträger 10a, in dessen Zentralausnehmung ein ebenfalls aus Blechlamellen gebildetes ringförmiges Blechpaket 11 angeordnet ist. Das Blechpaket 11 ist vorliegend in Umfangsrichtung segmentiert ausgeführt und durch eine Mehrzahl von identischen Statorsegmenten zu einem geschlossenen Ring zusammengesetzt. Die Drehachse A bildet somit zugleich die Mittelachse A der Maschine 1. Der Statorträger 10a kann wie in Fig. 1 dargestellt gleichzeitig ein Außengehäuse oder ein Zwischengehäuse der elektrischen Maschine 1 darstellen.

Das Blechpaket 11 umfasst ein an dem Statorträger 10a anliegendes ringförmiges Statorjoch und von diesem nach radial innen abstehende Zähne, welche zur Bildung einer Statorwicklung mit mehreren Statorspulen 16 bestückt sind. Die Statorspulen 16 sind hier als Einzelzahnspulen ausgebildet und mit Hilfe von zwei, aus einem wärmebeständigen Kunststoff bestehenden Isolier- bzw. Wickelkörpern 12a, 12b aus einem Kupferdraht um die Zähne 11c gewickelt und dort gegen ein Verrutschen gesichert. Die Wickelkörper 12a, b umfassen jeweils einen stirnseitig am Blechpaket 11 anliegenden Basisbereich bzw. Wickelträger 13 und zwei davon etwa rechtwinklig und am Stator 10 axial abstehende Schenkel 14, 15 welche einen Wickelbereich 17 in radialer Richtung begrenzen. An den Stirnseiten des Stators 10 bilden die Statorspulen 16 somit Wickelköpfe aus, welche axial am Blechpaket 11 überstehen.

Die Spulen 16 sind elektrisch einzelnen Strängen zugeordnet, wozu die Spulenenden 16a, b mittels einer in Fig. 1 nur schematisch dargestellten Verschaltungseinrichtung 20 in einer vorbestimmten Art und Weise miteinander verschaltet sind. Die Verschaltungseinrichtung 20 umfasst zu diesem Zweck mehrere gegenseitig isolierte Verbindungsleiter 22, 24, 26, welche zur Kontaktierung mit den Spulenenden 16a, b umfangsmäßig beabstandete Spulenanschlussbereiche 22a, 24a, 26a aufweisen. Die Verschaltungseinrichtung 20 ist vorliegend als ein vorgefertigtes Metall-Kunststoff-Verbundelement ausgebildet, bei dem die Verbindungsleiter 22, 24, 26 bis auf die Spulenanschlussbereiche 22a, 24a, 26a mit einem Kunststoff umspritzt sind und dadurch die innere und äußere Umfangsfläche und die Stirnseiten mit Kunststoff bedeckt sind.

Wie in Fig. 1 erkennbar, ist die Verschaltungseinrichtung 20 in einer axialen Fügerichtung zu den Statorspulen 16 gefügt und unmittelbar axial benachbart zu diesen angeordnet. Die Verschaltungseinrichtung 20 ist weiter über Leistungsanschlussbereiche 22b, 24b, 26b der Verbindungsleiter 22-26 mit einer Leistungselektronik 60 und einer Ansteuerelektronik 62 mit einer elektrischen Energiequelle 64 verbunden, welche zum Betreiben der elektrischen Maschine 1 die Statorspulen 16 mit einem Strom variabler Phase und Amplitude beaufschlagen kann.

Die Verbindungsleiter 22-26 sind aus einem Kupfer-Halbzeug, insbesondere aus einer Kupferplatte oder einem Kupferblech mittels Stanz- und Umformprozessen als Ringscheiben hergestellt. Wie in Fig. 1 dargestellt, sind die Ringscheiben am Stator 16 koaxial zur Mittelachse A angeordnet und axial zueinander gestapelt.

Die Spulenanschlussbereiche 22a-26a sind in dem hier erläuterten Ausführungsbeispiel am radial inneren Umfangsbereich der Verbindungsleiter 22-26 ausgeführt und ebenso wie die Spulenenden 16a, b axial ausgerichtet. Die Spulenanschlussbereiche 22a, 24a, 26a und die Spulenenden 16a, b sind dabei parallel zueinander positioniert und befinden sich zur Verschaltung im Wesentlichen auf ein und demselben Teilkreis. Die Leistungsanschlussbereiche 22b, 24b, 26b sind an der Verschaltungseinrichtung 20 als axial abstehende Anschlussfahnen aus Kupfer ausgebildet, welche einteilig mit den Verbindungsleitern 22-26 ausgeführt oder im Falle einer mehrteiligen Ausbildung mit diesen vorzugsweise verlötet oder verschweißt sein können.

Im dargestellten Ausführungsbeispiel sind die Spulenenden 16a, b mittels einer Dreieckschaltung mit den Verbindungsleitern 22-26 verbunden. Der Wicklungsanfang mit dem Spulenende 16a und das Wicklungsende mit dem Spulenende 16b treten beide radial innen aus dem Wickelbereich 17 einer Spule 16 aus. Zur Verschaltung werden jeweils zwei benachbarte Spulenenden 16a, b von zwei am Umfang benachbarten Spulen 16 auch mit unmittelbar zueinander benachbarten Spulenanschlussbereichen 22a, 24a, 26a eines der Verbindungsleiter 22-26 verbunden. Die Kontaktierung der Spulenenden 16a, b mit den Verbindungsleitern 22-26 erfolgt stoffschlüssig, insbesondere durch Löten oder Schweißen.

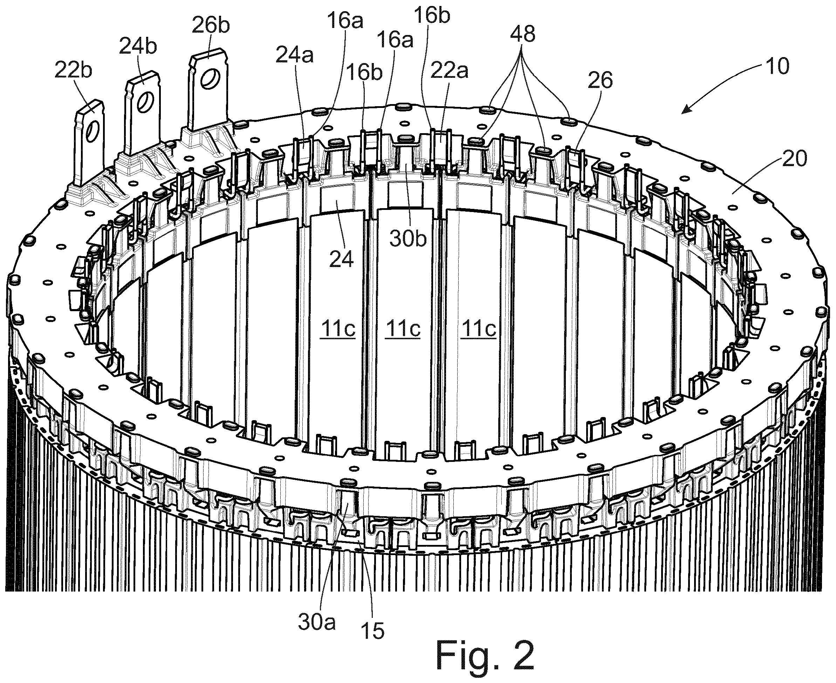

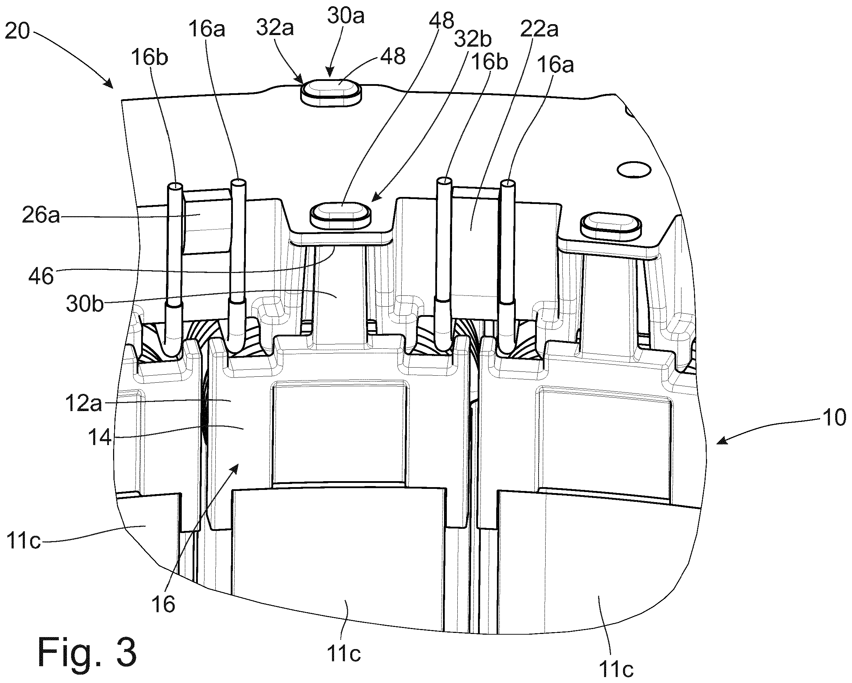

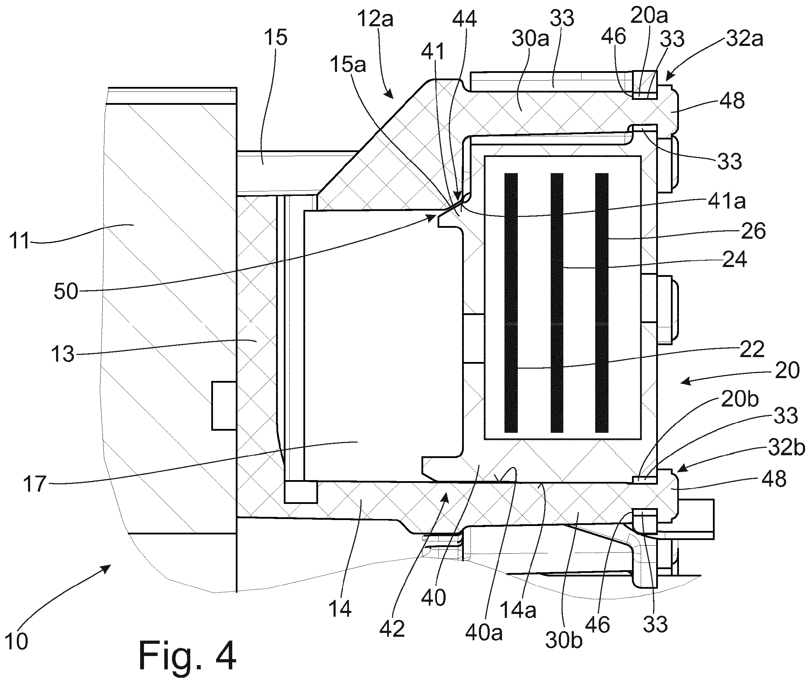

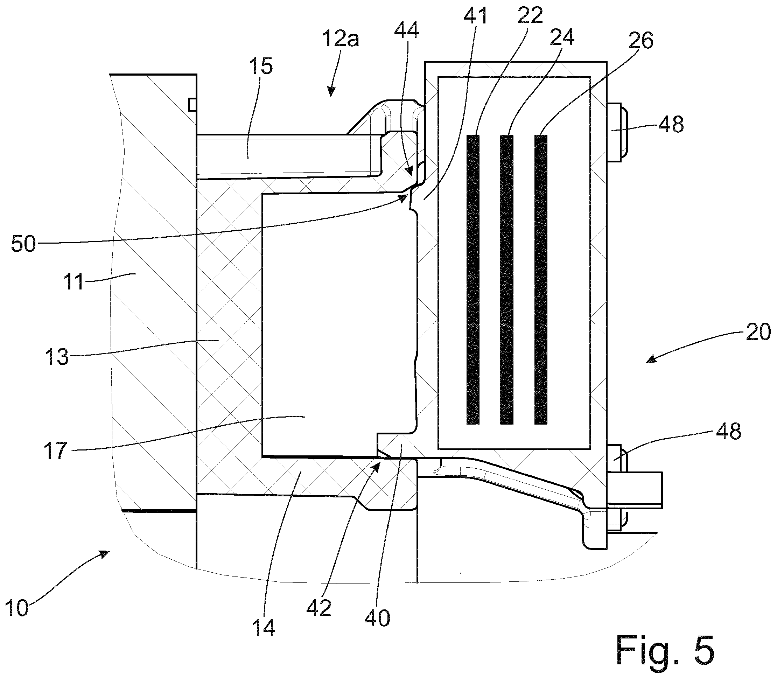

Die genaue Befestigung der Verschaltungseinrichtung 20 ist besonders gut anhand der Fig. 2-5 erkennbar, wobei zum Zweck einer besseren Übersichtlichkeit die Spulen 16 mit den Spulenenden 16a, b in den Fig. 4, 5 zeichnerisch nicht dargestellt sind. Die Verschaltungseinrichtung 20 ist an einem der Wickelkörper 12a jeweils an dem radial äußeren Schenkel 15 und an dem radial inneren Schenkel 14 festgelegt. Im Ausführungsbeispiel sind an der Verschaltungseinrichtung 20 mehrere in Umfangsrichtung verteilte radial innere und radial äußere Befestigungsöffnungen 20a, b vorgesehen. Dieser Radial- und Umfangsverteilung entsprechend sind an den Schenkeln 14, 15 axiale Verbindungsmittel 30a, b in Form von axial abstehenden Pins ausgebildet, welche die vorgefertigte Verschaltungseinrichtung 20 bis zur Anlage an Schulterbereichen 46 der Verbindungsmittel 30a, b bzw. der Pins aufnehmen können und danach beispielsweise durch ein nachfolgendes Heißverstemmen unter Ausbildung von Kopfbereichen 48 in der eingenommenen Axiallage fixieren können. Die Schulterbereiche 46 und die Kopfbereiche 48 der Pins 30a, b stellen somit axial beidseitig wirkende Axialanschläge dar, zwischen denen die Verschaltungseinrichtung 20 im Wesentlichen spielfrei festgelegt ist.

Die mittels der axialen Verbindungsmittel 30a, b erzeugten Axialverbindungen 32a, b weisen einen Radialspalt 30 bzw. einen Ringspalt 30 zwischen den Pins 30a, b und der Verschaltungseinrichtung 20 auf, so dass die Verbindungspartner an diesen Positionen ein gegenseitiges Radialspiel zulassen. Die axialen Verbindungsmittel 30a, b dienen somit der axialen Fixierung der Verschaltungseinrichtung 20 und sind von gegebenenfalls auftretenden geringfügigen radialen Verlagerungen der Verschaltungseinrichtung 20 gegenüber den Spulen 16 im Wesentlichen entkoppelt und dadurch entlastet.

Zur gegenseitigen definierten radialen Positionierung von Verschaltungseinrichtung 20 und Wickelkörpern 12a sind radiale Abstützmittel 40, 41 vorgesehen. Diese Abstützmittel 40, 41 sind vorliegend an der Verschaltungseinrichtung 20 als jeweils zwei, sich axial in Richtung eines Wickelkörpers 12a erstreckende Axialvorsprünge ausgebildet. Die Abstützmittel 40, 41 sind somit strukturell separat und funktional unabhängig von den axialen Verbindungsmitteln 30a, b ausgebildet.

Wie am besten in den Fig. 4, 5 zu sehen, wirkt jeder Vorsprung 40, 41 mit einem der beiden Schenkel 14, 15 eines Wickelkörpers 12a zusammen und bildet dort einen ersten bzw. einen zweiten Stützbereich 42, 44 aus.

Die Vorsprünge bzw. Abstützmittel 40, 41 weisen eine erste Stützfläche 40a und eine davon radial beabstandete zweite Stützfläche 41a auf. Dabei erstrecken sich die erste Stützfläche 40a und ein damit zusammenwirkender Führungsabschnitt 14a des radial inneren Schenkels 14 parallel zur Mittelachse A, das heißt entlang der axialen Fügerichtung der Verschaltungseinrichtung 20 und bilden den ersten Stützbereich 42 aus. Die zweite Stützfläche 41a und ein damit zusammenwirkender Anlageabschnitt 15a des radial äußeren Schenkels 15 sind dagegen gegenüber der Mittelachse A und der Fügerichtung geneigt ausgeführt und bilden einen zweiten Stützbereich 44 aus.

Beim axialen Fügen der Verschaltungseinrichtung 20 kann eine vordefinierte radiale Lagebeziehung zwischen der ersten Stützfläche 40a und dem Führungsabschnitt 14a realisiert werden, welcher von einer gegenseitigen Axiallage der Verbindungspartner unabhängig ist. Dagegen kann bedarfsweise zwischen der zweiten Stützfläche 41a und dem Anlageabschnitt 15a eine radiale Lagebeziehung erzeugt werden, welche demgegenüber weniger vordefiniert und damit radial innerhalb vorgegebener Grenzen variabel ist und welche von den jeweils existierenden radialen Fertigungs- und/oder Montagetoleranzen der Fügepartner abhängig ist. In den Fig. 4, 5 ist zwischen der zweiten Stützfläche 41a und dem Anlageabschnitt 15a ein Spalt 50 zu erkennen, so dass in diesem Bereich hier keine gegenseitige Anlage von Verschaltungseinrichtung 20 und Wickelkörper 12a vorliegt und der zweite Stützbereich 44 nicht in Eingriff ist. Das bedeutet, dass in diesem Fall die Verschaltungseinrichtung 20 und/oder die Anordnung der Wickelkörper 12a ideal kreisförmig ausgebildet sind und ein Eingriff am Stützbereich 44 nicht erforderlich ist. Die Zentrierung der Verschaltungseinrichtung 20 gegenüber den Statorspulen 16 erfolgt somit lediglich mittels des Stützbereichs 42.

Wie in den Figuren weiter erkennbar, sind die Spulenanschlussbereiche 22a, 24a, 26a räumlich näher zu dem ersten Stützbereich 42 als zu dem zu dem zweiten Stützbereich 44 angeordnet. Zudem sind die Stützbereiche 42, 44 radial zwischen den axialen Verbindungsmitteln 30a, b vorgesehen. Weiterhin treten die beiden Spulenenden 16a, b einer Spule 16 gemeinsam an dem inneren Schenkel 14 eines Wickelkörpers 12a aus dem Wickelbereich 17 aus. Der erste Stützbereich 42 ist in Umfangsrichtung am Stator 10 jeweils platzsparend zwischen den Spulenenden 16a, 16b eines Schenkels 14 ausgebildet.

### Bezugszeichen

- 1: elektrische Maschine
- 8: Rotor
- 8a: Rotorblechpaket
- 8b: Permanentmagnet
- 9: Luftspalt
- 10: Stator
- 10a: Statorträger
- 11: Statorblechpaket
- 11a: Statorsegment
- 11b: Statorjoch
- 11c: Statorzahn
- 12a, b: Wickelkörper
- 13: Wickelträger
- 14: Schenkel
- 14a: Führungsabschnitt
- 15: Schenkel
- 15a: Anlageabschnitt
- 16: Spule
- 16a: Spulenende
- 16b: Spulenende
- 17: Wickelbereich
- 20: Verschaltungseinrichtung
- 20a, b: Befestigungsöffnung
- 22: Verbindungsleiter
- 22a: Spulenanschlussbereich
- 22b: Leistungsanschlussbereich
- 24: Verbindungsleiter
- 24a: Spulenanschlussbereich
- 24b: Leistungsanschlussbereich
- 26: Verbindungsleiter
- 26a: Spulenanschlussbereich
- 26b: Leistungsanschlussbereich
- 30a, b: axiale Verbindungsmittel
- 33: Radialspalt
- 32a, b: Axialverbindung
- 40: radiale Abstützmittel
- 40a: Stützfläche
- 41: radiale Abstützmittel
- 41a: Stützfläche
- 42: erster Stützbereich
- 44: zweiter Stützbereich
- 46: Axialanschlag
- 48: Axialanschlag
- 50: Spalt
- 60: Leistungselektronik
- 62: Ansteuerelektronik
- 64: Energiequelle
- A: Mittelachse

## Patentansprüche

1. Stator (10) einer elektrischen Maschine (1) mit
- einem ringförmigen um eine Mittelachse (A) ausgebildeten Blechpaket (11), an dem mittels Wickelkörpern (12a, 12b) Statorspulen (16) mit Spulenenden (16a, b) angeordnet sind, wobei
- ein Wickelkörper (12a) einen Wickelbereich (17) aufweist, der durch einen Wickelträger (13) und zwei den Wickelbereich (17) in axialer Richtung begrenzende und mit dem Wickelträger (13) verbundene radial innere und radial äußere Schenkel (14, 15) gebildet ist, und mit
- einer Verschaltungseinrichtung (20) mit mehreren gegenseitig isolierten Verbindungsleitern (22-26), welche Spulenanschlussbereiche (22a-26a) zur Verschaltung der Statorspulen (16) aufweisen, wobei
- die Verschaltungseinrichtung (20) in einer axialen Fügerichtung zu den Statorspulen (16) gefügt und benachbart zu diesen angeordnet ist und wobei
- die Verschaltungseinrichtung (20) mit axialen Verbindungsmitteln (30a, b) unter Ausbildung einer Mehrzahl von Axialverbindungen (32a, b) an den Wickelkörpern (12a) festgelegt ist, wobei
- die Verschaltungseinrichtung (20) an einem der Wickelkörper (12a) jeweils an dem radial äußeren Schenkel (15) und an dem radial inneren Schenkel (14) festgelegt ist, wozu
- an der Verschaltungseinrichtung (20) mehrere in Umfangsrichtung verteilte radial innere und radial äußere Befestigungsöffnungen (20a, b) vorgesehen sind und wobei
- die axialen Verbindungsmittel (30a,b) in Form von axial abstehenden Pins ausgebildet sind, welche die vorgefertigte Verschaltungseinrichtung (20) bis zur Anlage an Schulterbereichen (46) der Pins (30a, b) aufnehmen können und danach unter Ausbildung von Kopfbereichen (48) und somit beidseitig wirkender Axialanschläge (46, 48) in der eingenommenen Axiallage fixieren können und wobei
- die Axialverbindungen (32a, b) einen Radialspalt (33) zur Ermöglichung eines gegenseitigen Radialspiels der Verbindungspartner aufweisen,
**dadurch gekennzeichnet, dass**
- die Verschaltungseinrichtung (20) radiale Abstützmittel (40, 41) zum Zusammenwirken mit den Wickelkörpern (12a) aufweist, welche unabhängig von den axialen Verbindungsmitteln (30a, b) ausgebildet sind, wobei
- die radialen Abstützmittel (40, 41) als jeweils zwei, sich axial in Richtung eines Wickelkörpers (12a) erstreckende Axialvorsprünge (40, 41) ausgebildet sind und wobei sich
- die Axialvorsprünge (40, 41) in den Wickelbereich (17) hinein erstrecken, wobei
- die Abstützmittel (40, 41) eine erste Stützfläche (40a) und eine davon radial beabstandete und zu der ersten Stützfläche (40a) radial gegenüberliegende zweite Stützfläche (41a) aufweisen, wobei
- sich die erste Stützflächen (40a) und ein damit zusammenwirkender Führungsabschnitt (14a) eines der Schenkel (14) parallel zur Mittelachse (A) erstrecken und den ersten Stützbereich (42) ausbilden und wobei
- sich die zweite Stützfläche (41a) und ein damit zusammenwirkender Anlageabschnitt (15a) des anderen Schenkels (15) in der axialen Fügerichtung unter einem spitzen Winkel gegenüber der Mittelachse (A) geneigt ausgebildet sind und den zweiten Stützbereich (44) ausbilden und wobei
- die Stützbereiche (42, 44) radial zwischen den axialen Verbindungsmitteln (30a, b) ausgebildet sind und wobei
- die radialen Abstützmittel (40, 41) einen ersten Stützbereich (42) und bedarfsweise einen zweiten Stützbereich (44) ausbilden, wobei eine Zentrierung der Verschaltungseinrichtung (20) gegenüber den Statorspulen (16) mittels lediglich einer der beiden Stützbereiche (42, 44) erfolgt.

2. Stator nach Anspruch 1, **dadurch gekennzeichnet, dass** die Spulenanschlussbereiche (22a-26a) der Verbindungsleiter (22 - 26) benachbart zu dem die Zentrierung der Verschaltungseinrichtung (20) bewirkenden Stützbereich (42) angeordnet sind.

3. Stator nach Anspruch 1 oder 2, **dadurch gekennzeichnet, dass** die beiden Spulenenden (16a, b) einer Spule (16) an demselben Schenkel (14, 15) eines der Wickelkörper (12a) aus dem Wickelbereich (17) austreten, wobei der erste Stützbereich (42) in Umfangsrichtung am Stator (10) zwischen diesen Spulenenden (16a, 16b) der Schenkel (14, 15) ausgebildet sind.

4. Elektrische Maschine (1) mit einem Rotor (8) und mit einem Stator (10), wobei der Stator (10) nach zumindest einem der Ansprüche 1 - 3 ausgeführt ist.

## Claims

1. Stator (10) of an electric machine (1) having
- an annular laminated core (11) which is formed around a centre axis (A) and on which stator coils (16) with coil ends (16a, b) are arranged by means of winding formers (12a, 12b), wherein
- a winding former (12a) has a winding region (17), which is formed by a winding carrier (13) and two radially inner and radially outer limbs (14, 15) delimiting the winding region (17) in the axial direction and connected to the winding carrier (13), and having
- an interconnection device (20) having a plurality of mutually insulated connecting conductors (22-26), which have coil connection regions (22a-26a) for the interconnection of the stator coils (16), wherein
- the interconnection device (20) is joined to the stator coils (16) in an axial joining direction and arranged adjacent thereto, and wherein
- the interconnection device (20) is secured to the winding formers (12a) by axial connecting means (30a, b) to form a multiplicity of axial connections (32a, b), wherein
- the interconnection device (20) on one of the winding formers (12a) is secured in each case to the radially outer limb (15) and to the radially inner limb (14), for which purpose
- a plurality of radially inner and radially outer fastening openings (20a, b), distributed in the circumferential direction, are provided on the interconnection device (20), and wherein
- the axial connecting means (30a, b) are in the form of axially projecting pins, which can receive the prefabricated interconnection device (20) until it abuts against shoulder regions (46) of the pins (30a, b) and can then fix it in the assumed axial position with the formation of head regions (48) and thus axial stops (46, 48) that act on both sides, and wherein
- the axial connections (32a, b) have a radial gap (33) for allowing a mutual radial play of the connecting partners,
**characterized in that**
- the interconnection device (20) has radial supporting means (40, 41) for cooperating with the winding formers (12a), which are formed independently of the axial connecting means (30a, b), wherein
- the radial supporting means (40, 41) are designed as two axial projections (40, 41) extending axially in the direction of a winding former (12a), and wherein
- the axial projections (40, 41) extend into the winding region (17), wherein
- the supporting means (40, 41) have a first support surface (40a) and a second support surface (41a), which is radially spaced from said first support surface and radially opposite the first support surface (40a), wherein
- the first support surfaces (40a) and a guide portion (14a), cooperating therewith, of one of the limbs (14) extend parallel to the centre axis (A) and form the first support region (42), and wherein
- the second support surface (41 a) and a contact portion (15a), cooperating therewith, of the other limb (15) are constructed at an acute angle with respect to the centre axis (A) in the axial joining direction and form the second support region (44), and wherein
- the support regions (42, 44) are formed radially between the axial connecting means (30a, b), and wherein
- the radial supporting means (40, 41) form a first support region (42) and, if necessary, a second support region (44), wherein a centring of the interconnection device (20) with respect to the stator coils (16) takes place by means of only one of the two support regions (42, 44).

2. Stator according to Claim 1, **characterized in that** the coil connection regions (22a-26a) of the connecting conductors (22 - 26) are arranged adjacent to the support region (42) that brings about the centring of the interconnection device (20).

3. Stator according to Claim 1 or 2, **characterized in that** the two coil ends (16a, b) of a coil (16) exit the winding region (17) at the same limb (14, 15) of one of the winding formers (12a), wherein the first support region (42) is formed on the stator (10) in the circumferential direction, between these coil ends (16a, 16b) of the limbs (14, 15).

4. Electric machine (1) having a rotor (8) and having a stator (10), wherein the stator (10) is constructed according to at least one of Claims 1 - 3.

## Revendications

1. Stator (10) de machine électrique (1) comprenant
- un paquet de tôles annulaire (11) formé autour d'un axe central (A), sur lequel des bobines de stator (16) pourvues d'extrémités de bobine (16a, b) sont disposées au moyen de corps d'enroulement (12a, 12b), dans lequel
- un corps d'enroulement (12a) présente une zone d'enroulement (17) formée par un porte-enroulement (13) et deux branches (14, 15) radialement intérieure et radialement extérieure, qui délimitent la zone d'enroulement (17) dans la direction axiale et reliées au porte-enroulement (13), et comprenant
- un dispositif d'interconnexion (20) pourvu de plusieurs conducteurs de connexion (22-26) mutuellement isolés, lesquels présentent des zones de connexion de bobine (22a-26a) pour l'interconnexion des bobines de stator (16), dans lequel
- le dispositif d'interconnexion (20) est assemblé dans une direction de jonction axiale avec les bobines du stator (16) et est disposé de manière adjacente à celles-ci, et dans lequel
- le dispositif d'interconnexion (20) est fixé aux corps d'enroulement (12a) par des moyens de liaison axiaux (30a, b) en formant une pluralité de liaisons axiales (32a, b), dans lequel
- le dispositif d'interconnexion (20) est fixé sur l'un des corps d'enroulement (12a), respectivement sur la branche radialement extérieure (15) et sur la branche radialement intérieure (14), et à cet effet
- il est prévu sur le dispositif d'interconnexion (20) plusieurs ouvertures de fixation (20a, b) radialement interne et radialement externe réparties dans la direction circonférentielle, et dans lequel
- les moyens de liaison axiaux (30a, b) sont réalisés sous la forme de broches faisant saillie axialement, lesquelles peuvent recevoir le dispositif d'interconnexion (20) préfabriqué jusqu'à l'appui sur des zones d'épaulement (46) des broches (30a, b) et peuvent ensuite le fixer dans la position axiale adoptée en formant des zones de tête (48) et ainsi des butées axiales (46, 48) agissant des deux côtés, et dans lequel
- les liaisons axiales (32a, b) présentent un interstice radial (33) pour permettre un jeu radial mutuel des partenaires de liaison,
**caractérisé en ce que**
- le dispositif d'interconnexion (20) comporte des moyens de support (40, 41) radiaux destinés à coopérer avec les corps d'enroulement (12a), lesquels sont réalisés indépendamment des moyens de liaison axiaux (30a, b), dans lequel
- les moyens de support (40, 41) radiaux sont respectivement réalisés sous la forme de deux saillies axiales (40, 41) s'étendant axialement en direction d'un corps d'enroulement (12a), et dans lequel
- les saillies axiales (40, 41) s'étendent jusque dans la zone d'enroulement (17), dans lequel
- les moyens de support (40, 41) présentent une première surface de support (40a) et une seconde surface de support (41a) radialement espacée de celle-ci et radialement opposée à la première surface de support (40a), dans lequel
- les premières surfaces de support (40a) et une section de guidage (14a) coopérant avec celle-ci de l'une des branches (14) s'étendent parallèlement à l'axe central (A) et forment la première zone de support (42), et
- la seconde surface de support (41a) et une section d'appui (15a) coopérant avec celle-ci de l'autre branche (15) sont réalisées inclinées sous un angle aigu par rapport à l'axe central (A) dans la direction de jonction axiale et forment la seconde zone de support (44), et dans lequel
- les zones de support (42, 44) sont formées radialement entre les moyens de liaison axiaux (30a, b), et dans lequel
- les moyens de support radiaux (40, 41) forment une première zone de support (42) et, au besoin, une seconde zone de support (44), un centrage du dispositif d'interconnexion (20) par rapport aux bobines de stator (16) étant effectué au moyen de seulement l'une des deux zones de support (42, 44).

2. Stator selon la revendication 1, **caractérisé en ce que** les zones de connexion de bobine (22a-26a) des conducteurs de connexion (22-26) sont disposées de manière adjacente à la zone de support (42) assurant le centrage du dispositif d'interconnexion (20).

3. Stator selon la revendication 1 ou 2, **caractérisé en ce que** les deux extrémités de bobine (16a, b) d'une bobine (16) sortent de la zone d'enroulement (17) au niveau de la même branche (14, 15) de l'un des corps d'enroulement (12a), la première zone de support (42) étant formée dans la direction circonférentielle sur le stator (10) entre ces extrémités de bobine (16a, 16b) des branches (14, 15).

4. Machine électrique (1) comprenant un rotor (8) et un stator (10), le stator (10) étant conçu selon au moins l'une des revendications 1 à 3.
